# EUROPÄISCHE PATENTSCHRIFT

(11) **EP 1 636 057 B1**
(45) Veröffentlichungstag und Bekanntmachung des Hinweises auf die Patenterteilung: **13.08.2008**
(21) Anmeldenummer: 04740260.7
(22) Anmeldetag: 24.06.2004
(51) Int. Cl.: B60J 5/00

(54) **TÜRMODUL**
DOOR MODULE
MODULE DE PORTIERE

(30) Priorität: 25.06.2003 DE 10329238
(43) Veröffentlichungstag der Anmeldung: 22.03.2006
(73) Patentinhaber: Faurecia Innenraum Systeme GmbH, 76767 Hagenbach (DE)
(72) Erfinder: KOELLNER, Harald, 63674 Altenstadt (DE); SCHLIWA, Enrico, 99819 Gerstungen/OT Lauchröden (DE); ZIMMERMAN, Eric, 34125 Kassel (DE); ECKHARDT, Bernhard, 35578 Wetzlar (DE); WANDTKE, Sebastian, 37073 Göttingen (DE)
(74) Vertreter: Pfenning, Meinig & Partner GbR
(86) Internationale Anmeldenummer: PCT/EP2004/006847
(87) Internationale Veröffentlichungsnummer: WO 2004/113105

(56) Entgegenhaltungen:
- EP-A- 1 060 918
- US-A- 4 597 153
- US-A- 4 845 894
- US-A- 5 927 021

## Beschreibung

Die vorliegende Erfindung betrifft ein Türmodul zur Überdeckung von Öffnungen in einer Kraftfahrzeugtür.

Türmodule zur Überdeckung von Öffnungen in Kraftfahrzeugtüren und zum Halten von Funktionselementen wie elektrischen Fensterheberanordnungen, Lautsprechern etc. sind prinzipiell bereits bekannt. Um ein ansprechendes Erscheinungsbild im Fahrzeuginnenraum zu liefern, muss das Türmodul jedoch fahrzeuginnenraumseitig noch mit einer Türinnenverkleidung abgedeckt werden.

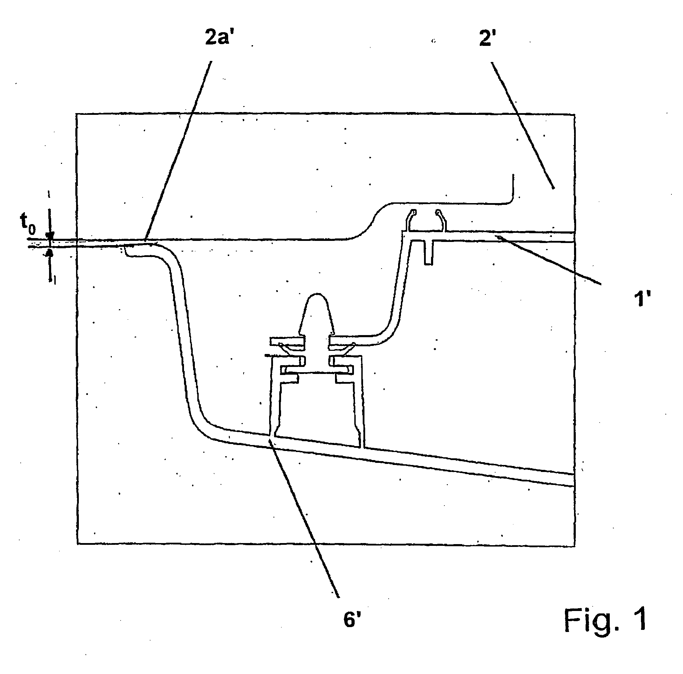

Diese Türinnenverkleidung wird üblicherweise an beliebigen Stellen des Türmoduls angebracht, siehe z.B. US-A-4 845 894. Hierbei ist jedoch zu beachten, dass das Spaltmaß zwischen der Türinnenverkleidung und einem Türinnenblech, in welchem die Öffnung für das Türmodul versehen ist, eine bestimmte Höhe nicht übersteigt. Diese Toleranzanforderung ist allerdings in der Praxis recht schwer zu verwirklichen, da zum einen das Türmodul sehr exakt in die Öffnung des Türinnenblechs eingepasst werden muss und zusätzlich die Türinnenverkleidung auch noch ganz genau positioniert werden muss, um das geforderte Spaltmaß zu erreichen (hierzu wird bereits jetzt auf die weiter unten noch genauer beschriebene Figur 1 verwiesen, welche einen Aufbau nach dem Stand der Technik darstellt, worin t₀ das einzuhaltende Spaltmaß darstellt).

An diesem Aufbau nach dem Stand der Technik ist somit nachteilig, dass entweder ästhetische Einbußen beim Spaltmaß in Kauf genommen werden müssen oder dass aufgrund der hohen Toleranzanforderungen die Herstellungskosten hoch sind.

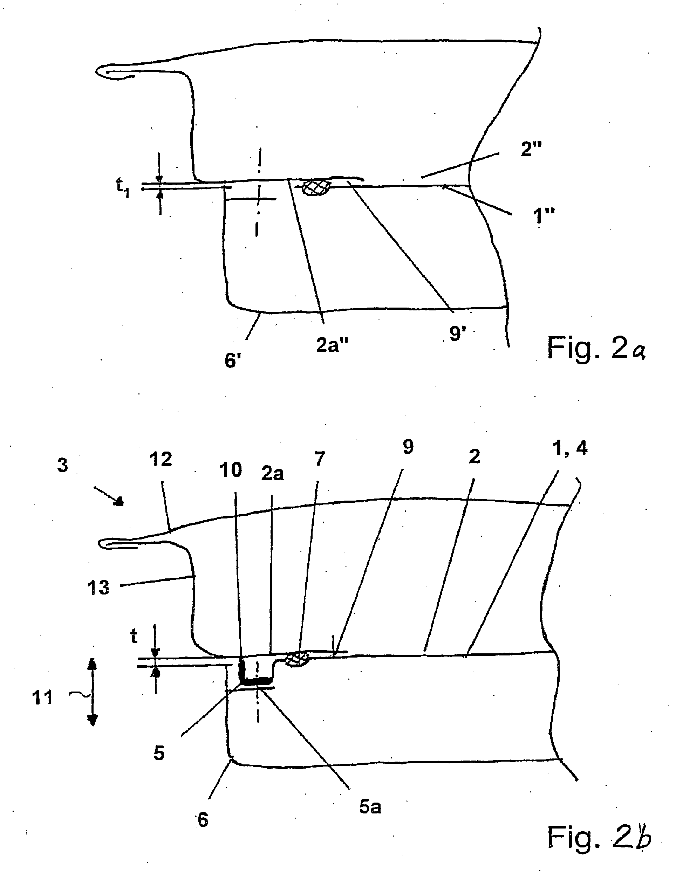

Zur Vermeidung dieser Nachteile ist vorgeschlagen worden, dass die Türinnenverkleidung nicht an dem Türmodul, sondern z.B. an dem Türinnenblech selbst befestigt wird (diese Verhältnisse sind in Figur 2a dargestellt). Hierdurch wird es zwar leichter, das (in Figur 2a mit t₁ bezeichnete Spaltmaß) einzustellen. Ein hierbei auftretender gravierender Nachteil besteht jedoch darin, dass hierzu regelmäßig Löcher in das Türinnenblech aufgebracht werden müssen, welche einen Feuchtigkeitseintrag ermöglichen bzw. nur mit sehr aufwendigen Mitteln abzudichten sind. Diese Abdichtung ist essentiell wichtig, da sonst Feuchtigkeit von der Außenseite des Türmoduls hinter die Türinnenverkleidung gelangen könnte und somit es zu Fäulnisbildung kommen könnte.

Ausgehend von diesem Stand der Technik liegt der vorliegenden Erfindung die Aufgabe zugrunde, ein Türmodul bzw. eine dieses Türmodul beinhaltende Kraftfahrzeugtür zu schaffen, welche einerseits kostengünstig herstellbar sind und außerdem keine Probleme in Bezug auf Fäulnisbildung etc. liefert.

Diese Aufgabe wird in Bezug auf das Türmodul durch den Gegenstand des Patentanspruchs 1 gelöst.

Dieser offenbart ein Türmodul zur Überdeckung von Öffnungen in einer Kraftfahrzeugtür, wobei das Türmodul einen Grundkörper aufweist, welcher vorzugsweise in einem Randbereich des Türmoduls gegenüber dem Grundkörper mindestens einen beweglichen (d.h. leichter verformbaren, sei es durch geringere Materialdicke oder gesonderte Elemente wie Federn etc.) Ausleger zur Auflage auf einem Randbereich der Öffnung aufweist, wobei der Ausleger mindestens einen Fixierpunkt zum Befestigen einer Türverkleidung aufweist.

Hiermit wird also erreicht, dass z.B. eine Türinnenverkleidung nicht an einer beliebigen Stelle des Grundkörpers wie bisher, sondern an dem Ausleger befestigt wird.

Dieser Ausleger wird direkt im Randbereich der Öffnung, d.h. z.B. auf einem Türinnenblech aufgelegt, so dass hier ein Referenzmaß gegeben ist. Hierbei ist der Ausleger konstruktiv in Bezug auf das Türinnenblech so zu gestalten, dass bei einem befestigten Türmodul der Aufleger immer (vorzugsweise mit Druck) auf einen bestimmten Punkt der Innenverkleidung gestützt ist. Dadurch dass der Ausleger einen Fixierpunkt für die Innenverkleidung aufweist, kann die Türinnenverkleidung an einem Referenzpunkt montiert werden. Durch das Abstützen des Auflegers an dem Randbereich der Öffnung (d.h. z.B. dem Türinnenblech) wird die oben beschriebene lange Toleranzkette verkürzt, da die Türverkleidung über den direkt auf dem Randbereich abgestützten Ausleger einfach und exakt gegenüber dem Türinnenblech positionierbar ist. Hierdurch lässt sich auf sehr einfache Weise ein exaktes Spaltmaß erhalten.

In Bezug auf eine Kraftfahrzeugtür wird die Aufgabe durch den Gegenstand des Patentanspruchs 13 gelöst. Dieses enthält ein erfindungsgemäßes Türmodul.

Am ehesten relevant ist hier eine Kraftfahrzeugtür, welche einen Blechaufbau besitzt und die vom Türmodul zu überdeckende Öffnung ein Ausschnitt eines Türinnenbleches ist. Dies ist bei in den meisten Fahrzeugen vorkommenden klassischen Fallsanordnung von Türinnenblech und Türaußenblech gegeben. Selbstverständlich ist es jedoch in einer zweiten Ausführungsform auch möglich, dass die Kraftfahrzeugtür einen Rahmenaufbau, wobei die von dem Türmodul zu überdeckende Öffnung von dem (z.B. aus vier Hohlquerschnitten zusammengesetzten) Rahmen zumindest bereichsweise begrenzt ist.

Vorteilhafte Weiterbildungen der vorliegenden Erfindung werden in den abhängigen Ansprüchen beschrieben.

Es ist also offensichtlich, dass die Erfindung gegenüber dem eingangs geschilderten Stand der Technik wesentliche Vorteile liefert. Insbesondere gegenüber der Befestigung der Türinnenverkleidung direkt am Türinnenblech ist eine Einsparung der wasserdichten Befestigungstechnik zu verzeichnen. Dies führt zu einer erheblichen Kosten- und Gewichtsreduzierung. Hinzu kommen Vorteile beim Qualitätsmanagement, da kein Risiko besteht, dass bei der Montage die Dichtung des Türinnenbleches nicht funktionsfähig eingebaut wurde und somit ein Feuchtigkeitsdurchtritt durch die Modulebene gegeben wäre.

Vorteilhafte Weiterbildungen der vorliegenden Erfindung werden in den abhängigen Ansprüchen beschrieben.

Eine bevorzugte Weiterbildung sieht vor, dass das Türmodul aus Metallblech oder auch Kunststoff besteht. Insbesondere bieten sich hier Kunststoffe an, da diese kostengünstig herzustellen sind und neben günstigen gewichts- und wasserabdichtenden Eigenschaften auch beim Crashverhalten günstig sind. Vorzugsweise kommt hier als Kunststoff Polypropylen mit eingelegten Langfasern in Betracht, z.B. PP 30 LGF.

Eine weitere vorteilhafte Weiterbildung sieht vor, dass das Türmodul eine umlaufende Dichtung zur Feuchtigkeitsabgrenzung der Türöffnung aufweist. Dies kann z.B. eine umlaufende Aufnahme sein, in welche etwa ein Elastomer-Hohlprofil hintergreifend eingebracht wird. Selbstverständlich kann es auch eine aufgelegte Elastomerbahn sein. Möglich ist auch, eine Dichtung z.B. auf dem Türinnenblech aufzulegen zum Kontakt mit dem Türmodul. Aus Herstellungsgründen empfiehlt es sich, diese Dichtung auf der dem späteren Fahrzeuginnenraum zugewandten Seite des Türinnenbleches anzubringen. Es sind jedoch hier beliebige Ausführungsformen möglich, wichtig ist jedoch dass die von dem Türmodul zu leistende Aufgabe der Nass-/Trockentrennung erreicht wird.

Eine weitere vorteilhafte Weiterbildung sieht vor, dass der Ausleger integral an dem Grundkörper des Türmodul angeformt ist. Hierbei sollte die Eigenverformung des Materials des Türmoduls so gestaltet sein, dass auch bei Vibrationen/Belastung der Aufleger immer auf den Randbereich (also z.B. das Türinnenblech) gepresst bleibt, um das Referenzmaß für eine z.B. auf dem Ausleger fixierte Türinnenverkleidung beizubehalten. Hierzu kann z.B. vorgesehen sein, dass im Übergangsbereich vom Grundkörper zum Ausleger ein zum Grundkörper gehörendes Filmscharnier angeordnet ist. Dieses Filmscharnier bietet aufgrund der Materialschwächung in diesem Bereich eine höhere Elastizität und kann hiermit die gewünschten Verformungseigenschaften liefern. Auf diese Weise integral angeordnete Ausleger können besonders einfach hergestellt werden, z.B. einfach in einem Kunststoffspritzgussprozess mitgespritzt werden. Es ist darüber hinaus auch möglich, dass der Grundkörper z.B. in diesem Bereich senkrecht zum Filmscharnier einen Überbrückungssteg aufweist zur Versteifung der Verbindung mit dem Ausleger.

Eine weitere vorteilhafte Weiterbildung sieht vor, dass mindestens ein Ausleger als Fixierpunkt eine Öffnung zum Einklipsen von Teilen der Innenverkleidung aufweist. Hierdurch ist es z.B. möglich, besonders einfach hintergreifende und einzuklipsende Befestigungssysteme vorzusehen. Selbstverständlich ist auch Schrauben, Kleben oder Nieten möglich, um die Türverkleidung an dem Ausleger zu fixieren.

Je nach Stabilität der Türverkleidung bietet es sich an, die Zahl der Ausleger zu variieren. Um um die Außenkontur der Türverkleidung herum ein einheitliches Spaltmaß zu verwirklichen, ist es besonders vorteilhaft, dass 3 bis 20, vorzugsweise 5 bi 15, besonders vorzugsweise 8 bis 10 Ausleger um den Umfang der Verkleidung bzw. des Moduls herum verteilt sind.

Eine weitere Weiterbildung sieht vor, dass als Alternative oder auch in Kombination mit der integralen Anformung des Auslegers ein Ausleger durch mindestens ein bewegliches Federelement an dem Grundkörper des Türmoduls befestigt ist. Hierdurch können besonders bewegliche und auch nachträglich einstellbare Kopplungen ermöglicht werden. Es können z.B. axiale Federführungen zum Einsatz kommen, so dass klar wird, dass nicht zwingend die Eigenverformung des Türmodulmaterials nötig ist, um die Beweglichkeit des Auslegers gegenüber dem Grundmodul zu ermöglichen, auch wenn es sich bei dieser Variante wohl um die kostengünstigste handelt.

Eine weitere Weiterbildung sieht vor, dass das Türmodul (bzw. der Grundkörper des Türmoduls) Fixierelemente aufweist zum Befestigen des Türmoduls am Randbereich der Öffnung. Vorzugsweise sind dies z.B. Raststifte, welche in das Türinnenblech eingerastet werden. Hierbei ist es besonders nützlich, wenn diese innerhalb der oben beschriebenen Dichtung zur Nass-/Trockentrennung angeordnet sind, da hier dann keine Gefahr des Flüssigkeitsdurchtritts gegeben ist, wenn diese z.B. Raststifte auf der dem Innenraum abweisenden Seite angeordnet sind und somit keinen Flüssigkeitsdurchtritt durch das Türmodul erzeugen können.

Eine weitere vorteilhafte Weiterbildung sieht vor, dass die Elastizität des Auslegers gegenüber dem Grundkörper der Gestalt ist, dass der Grundkörper gegenüber einem Referenzpunkt (vorzugsweise eine Auflagekante) senkrecht zur Türebene bzw. der Modulebene um 1 bis 10 mm, vorzugsweise 2 bis 6 mm unter Aufrechterhaltung von Druck der Auflagenkante auf den Randbereich der Öffnung beweglich ist. Hierdurch wird gewährleistet, dass die Auflagekante stets auf dem Randbereich (z.B. dem Türinnenblech) gepresst bleibt und somit der Referenzpunkt zur Anbindung der auf den Ausleger montierten Türverkleidung bestehen bleibt, unabhängig davon, ob die Tür Unebenheiten aufweist bzw. wie das Modul gegenüber dem Türinnenblech befestigt ist.

Wie bereits oben gezeigt, stellt das erfindungsgemäße Türmodul insbesondere für Türmodule aus Kunststoff, welche Aufnahmen für einen Fensterhebermechanismus, Lautsprecher oder dergleichen aufweisen besondere Vorteile dar, um hiermit eine Türinnenverkleidung kostengünstig und mit gleichmäßigem Spaltmaß zu einem Türinnenblech hin zu gewährleisten.

Weitere vorteilhafte Weiterbildungen werden in den übrigen abhängigen Ansprüchen angegeben.

Die Erfindung wird nun anhand mehrerer Figuren erläutert. Es zeigen:
- Figur 1: einen Aufbau nach einer ersten Ausführungsform nach dem Stand der Technik;
- Figur 2a: einen Aufbau nach einer zweiten Ausführungsform nach dem Stand der Technik;
- Figur 2b: einen detaillierten Querschnitt des Aufbaus eines montierten Türmoduls nach der Erfindung sowie
- Figuren 3a/3b: Details des erfindungsgemäßen Türmoduls.

Figur 1 zeigt eine Anordnung nach dem Stand der Technik. Hierin ist ein Kraftfahrzeugtürinnenblech gezeigt mit einer Öffnung 2', welche von einem Randbereich 2a' umgeben ist. Ein Kunststoffmodul 1' nach dem Stand der Technik (in Figur 1 ohne Dichtung dargestellt) wird auf hier nicht dargestellte Weise mit dem Türinnenblech direkt verbunden. Eine Türinnenverkleidung 6' wird mittels einer Rastnase im Randbereich des Türmoduls 1' befestigt. Bei genauer Abstimmung sämtlicher Befestigungen ist das einzuhaltende Spaltmaß t₀ des Randes der Türinnenverkleidung gegenüber dem Türinnenblech eingehalten.

Figur 2a zeigt eine weitere Variante nach dem Stand der Technik. Hierbei ist ein Türinnenblech gezeigt, welches eine Öffnung 2" aufweist, wobei der Randbereich um die Öffnung herum mit 2a" bezeichnet ist. Ein Türmodul 1" ist die Öffnung 2" überdeckend montiert. Zur Einhaltung eines gewünschten Spaltmaßes t₁ verfolgt die Befestigung der Türinnenverkleidung 6' direkt im Randbereich 2a" des Türinnenbleches, so dass hier zusätzliche Abdichtungsmaßnahmen notwendig sind, um die Nass-/Trockentrennung durch die Ebene des Türmoduls bzw. des Türinnenbleches zu erreichen.

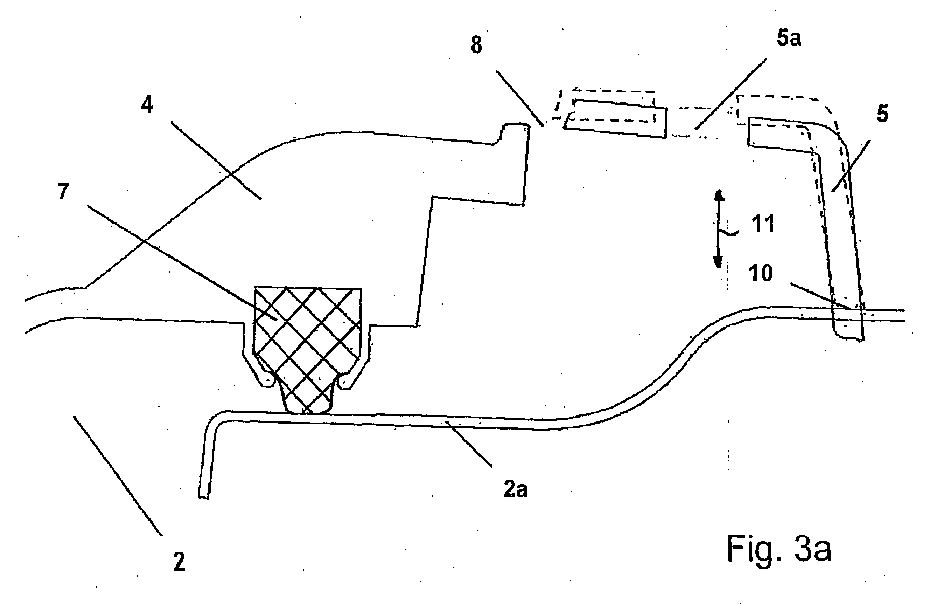

Figur 2b zeigt eine erfindungsgemäße Anordnung. Hierbei ist ein erfindungsgemäßes Türmodul 1 gezeigt, welches in seinem Randbereich eine umlaufende Dichtung 9 zur Feuchtigkeitsabgrenzung der Türöffnung 2 aufweist. Die in Figur 2b gezeigte schematische Darstellung der Dichtung ist in Figur 3a nochmals besser zu sehen. Dort ist in eine Fahrzeuginnenraum zum Türinnenblech hinweisenden U-förmigen Ausnehmung eine Elastomerdichtung hintergreifend eingebracht. Das Türmodul ist aus Polypropylen mit beigemengten Langfasern, der Werkstoff nennt sich PP 30 LGF. Die Befestigung des Türmoduls 1 an das Türinnenblech 13 verläuft durch Fixierelemente in Form von Rastnasen 9, welche auf der dem Fahrzeuginnenraum abweisenden Seite des Türmoduls integral mit eingebracht sind und welche innerhalb der umlaufenden Dichtung 7 in das Türinnenblech eingeklipst werden.

Im Randbereich des Türmoduls sind Ausleger 5 (insgesamt 10 Ausleger) angebracht. Diese Ausleger sind integraler Bestandteil des Türmoduls. Das Türmodul weist also einen Grundkörper auf, welcher mit den Auslegern verbunden ist, wobei der Ausleger hier (hier durch Eigenelastizität des Übergangsbereiches zwischen Ausleger und Grundkörper) beweglich ist. Der Ausleger 5 hat eine Auflagekante 10, welche in der montierten Lage des Türmoduls fest auf das Türinnenblech drückt. Der Ausleger 5 weist aufgrund seiner Materialdicke und Kontur einen sehr steifen Aufbau auf. Der Ausleger verfügt weiterhin über einen Fixierpunkt, hier eine Öffnung 5a, in welche eine Türinnenverkleidung z.B. eingeklipst wird. Durch diese Anordnung ist es möglich, das strenge Toleranzmaß T des Spaltmaßes zwischen Türinnenblech und Türinnenverkleidung einzuhalten.

Gezeigt ist hier also ein Türmodul 1 zur Überdeckung von Öffnungen 2 in einer Kraftfahrzeugtür 3 (hier gezeigt anhand einer Tür mit Blechaufbau, wobei ein Türaußenblech 12 um ein strukturierten Türinnenblech 13 im Randbereich herum gefalzt ist), wobei das Türmodul einen Grundkörper 4 aufweist, welcher vorzugsweise in einem Randbereich des Türmoduls gegenüber dem Grundkörper mindestens einen beweglichen Ausleger (5) zur Auflage auf einem Randbereich 2a der Öffnung aufweist, wobei der Ausleger mindestens einen Fixierpunkt 5a zum Befestigen einer Türverkleidung 6 besitzt. Dieser Fixierpunkt ist hier als Öffnung 5a ausgearbeitet, in welche eine Rastnase der Türinnenverkleidung hintergreifend einschnappbar ist. Wie bereits oben ausgeführt, handelt es sich um den Ausleger um einen sehr stabilen Abschnitt des Moduls, da dieser einerseits der Befestigung der Türinnenverkleidung dient und andererseits so stabil sein muss, dass selbst unter Belastung das Referenzmaß zur Auflagekante 10 hin gegeben bleibt, so dass das Toleranzmaß t der Türinnenverkleidung stets gegeben ist. Hierzu kann es vorteilhaft sein, den Übergangsbereich zwischen Ausleger und Grundkörper 4 des Türmoduls 1 als Filmscharnier auszubilden, da es sich hier um eine besonders einfach zu fertigende Ausführungsform handelt. Dieses Filmscharnier kann bereits im Spritzgießprozess genau gefertigt werden. Dies bietet sich insbesondere für Kunststoffmodule an. Diese Kunststoffmodule bieten außerdem den Vorteil, dass auch auf eine einfache Weise beliebige Aufnahmen für einen Fenstermechanismus, Lautsprecher, Befestigungen für Mittelkonsolen etc. möglich sind.

Wichtig ist, dass der Ausleger immer als klaren Bezugspunkt die Auflagekante 10 hat, unabhängig von der Belastung der Tür bzw. einem möglichen Lösen bzw. Verformen des Grundkörper 1 bezüglich des Türinnenbleches. Hierzu ist vorliegend die Elastizität des Auslegers gegenüber dem Grundkörper (und zwar durch entsprechende Gestaltung des Zwischenraums zwischen Ausleger und Grundkörper) dergestalt, dass der Grundkörper gegen die Auflagekante 10 des Auflegers senkrecht zur Türebene (d.h. in Richtung 11 in Figur 2b) um 2 bis 6 mm unter Aufrechterhaltung des Drucks der Auflagenkante auf den Randbereich der Öffnung beweglich ist. Hierdurch wird gewährleistet, dass die Auflagekante stets auf das Türinnenblech gepresst ist und somit der Referenzpunkt für die Türinnenverkleidung immer bestehen bleibt, unabhängig davon, ob das Türinnenblech z.B. Unebenheiten aufweist bzw. ob das Modul sich leicht von dem Türinnenblech löst (z.B. nach langem Fahrzeugbetrieb).

Abschließend wird noch auf zwei Details der erfindungsgemäßen Ausführungsform eingegangen.

Figur 3a zeigt einen Querschnitt des Randbereichs des Türmoduls, welches auf das Türinnenblech gerichtet ist. Der Grundkörper 4 ist hier mit einer umlaufenden Dichtung 7 versehen, wobei die Dichtung auf einen Randbereich 2a (gebildet von einem Türinnenblech) presst, wobei der Randbereich 2a die Öffnung 2 im Türinnenblech umgibt. Neben dem Grundkörper 4 ist hier der Ausleger 5 in zwei Bewegungsstadien zu sehen. Die durchgezogene Linie zeigt hierbei den Zustand des Auslegers im unverformten Zustand des Übergangsbereiches zwischen Ausleger und Grundkörper. Da aber das Türinnenblech existent ist, kommt es zu einer Verformung des Filmscharniers, wobei sich der durch Strichlinierung gezeigte Bewegungszustand des Auslegers 5 ergibt. Das Türinnenblech agiert hier als Widerlager, der Ausleger 5 stützt sich mit seiner Auflagekante 10 auf dem Türinnenblech ab. Das heißt, dass bei montiertem Türmodul der Ausleger 5 immer mit Druck auf das Türinnenblech fixiert ist. Hierdurch ergibt sich für eine Türinnenverkleidung, welche in eine Öffnung 5a des Auslegers eingerastet ist, immer ein klarer Bezugspunkt zu dem Türinnenblech. Die erfindungsgemäße Vorspannung des Auslegers stellt sicher, dass immer das gewünschte Referenzmaß zwischen Türinnenverkleidung und Türinnenblech einstellbar ist. Hierbei sorgt die geringe Eigenverformung des Auslegers (gegenüber dem Filmscharnier 8) dafür, dass es zu keiner Eigenverformung des Auslegers kommt, welche das Toleranzmaß ungünstig beeinflussen könnte.

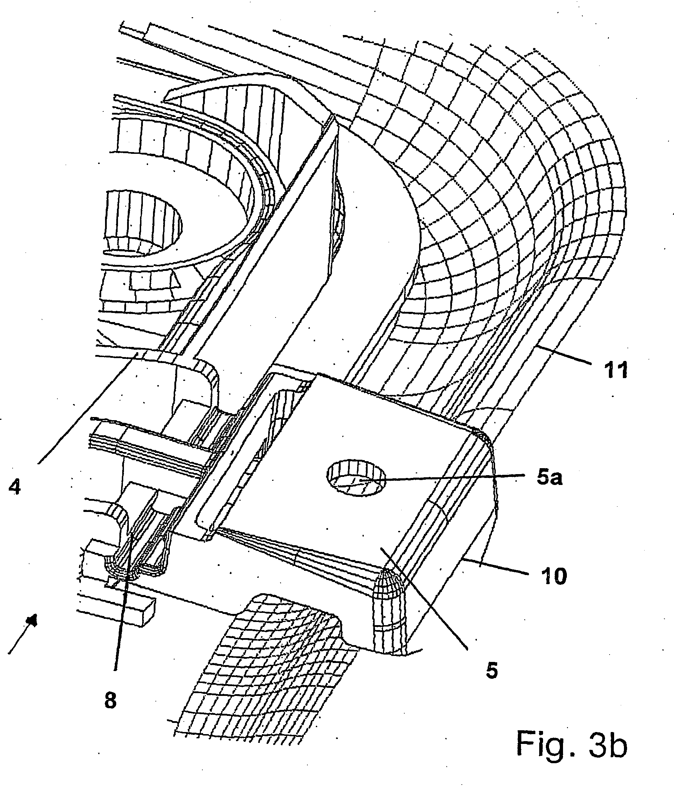

Diese Verhältnisse werden nun nochmals durch die perspektivische Ansicht in Figur 3b verdeutlicht. Auch hier ist das Türmodul 1 gezeigt, welches einen Grundkörper 4 aufweist, in welchem z.B. Elemente eines Fensterhebermechanismus einklipsbar sind. Der Grundkörper 4 ist über ein zu dem Grundkörper gehörendes Filmscharnier 8 mit dem Ausleger 5 verbunden. Das Filmscharnier 8 ist integral in das Kunststoffmodul eingebracht. Zur Versteifung des Filmscharniers ist eine das Filmscharnier senkrecht kreuzende Brücke eingebaut.

In Figur 3b ist besonders gut zu sehen, wie sich der Ausleger 5 mit seiner Auflagekante 10 auf dem Türinnenblech 11 abstützt. Die Öffnung 5a bietet hierbei einen Fixierpunkt für das Einschnappen einer Türinnenverkleidung.

An der Erfindung ist u.a. wesentlich, einen integrierten Ausleger angebunden an das Modul mittels Filmscharnier oder federndem Element zu schützen.

Dieser integrierte, federnde Ausleger des Moduls, stützt sich am Innenblech ab und nimmt die Türverkleidung auf.

Daraus folgt: Das Innenblech hat bekannterweise gewisse Toleranzen in der Planität. Die federnden Ausleger des Moduls passen sich individuell und automatisch dem Istzustand des Innenblechs an. An jedem dieser Ausleger wird dann die Türverkleidung montiert.

Ergebnis: Das Spaltmaß zwischen Türblech und Türverkleidung ist nur noch abhängig von der Höhe und Höhentoleranz der Ausleger. Da diese Höhe recht klein ist, wird auch die Toleranz sehr klein sein (Interdependenz zwischen Nennmaß und Toleranz).

## Patentansprüche

1. Türmodul (1)zur Überdeckung von Öffnungen (2)in einer Kraftfahrzeugtür (3), **dadurch gekennzeichnet, dass** das Türmodul einen Grundkörper (4) aufweist, welcher in einem Randbereich gegenüber dem Grundkörper mindestens einen beweglichen Ausleger (5) zur Auflage auf einem Randbereich (2a) der Öffnung aufweist, wobei der Ausleger mindestens einen Fixierpunkt (5a) zum Befestigen einer Türverkleidung aufweist.

2. Türmodul nach Anspruch 1, **dadurch gekennzeichnet, dass** dieses aus Metallblech oder Kunststoff besteht.

3. Türmodul nach einem der vorhergehenden Ansprüche, **dadurch gekennzeichnet, dass** die Verkleidung eine Türinnenverkleidung (6) ist.

4. Türmodul nach einem der vorhergehenden Ansprüche, **dadurch gekennzeichnet, dass** dieses eine umlaufende Dichtung (7) zur Feuchtigkeitsabgrenzung der Türöffnung (2) aufweist.

5. Türmodul nach einem der vorhergehenden Ansprüche, **dadurch gekennzeichnet, dass** der Ausleger (5) integral an dem Grundkörper (4) angeformt ist.

6. Türmodul nach Anspruch 5, **dadurch gekennzeichnet, dass** im Übergangsbereich vom Grundkörper (4) zum Ausleger (5) ein zum Grundkörper gehörendes Filmscharnier (8) angeordnet ist.

7. Türmodul nach einem der vorhergehenden Ansprüche, **dadurch gekennzeichnet, dass** der Ausleger (5) als Fixierelement eine Öffnung (5a) zum Einklipsen von Teilen der Innenverkleidung aufweist.

8. Türmodul nach einem der vorhergehenden Ansprüche, **dadurch gekennzeichnet, dass** mehrere Ausleger (5) vorhanden sind, wobei dies 3 bis 20, vorzugsweise 5 bis 15, besonders vorzugsweise 8 bis 12 Ausleger um den Umfang des Moduls (1) herum verteilt sind.

9. Türmodul nach einem der Ansprüche 1 bis 4, **dadurch gekennzeichnet, dass** der Ausleger (5) durch mindestens ein bewegliches Federelement an dem Grundkörper befestigt ist.

10. Türmodul nach einem der vorhergehenden Ansprüche, **dadurch gekennzeichnet, dass** das Türmodul (1) Fixierelemente (9) aufweist zum Befestigen des Moduls am Randbereich (2a) der Öffnung (2).

11. Türmodul nach einem der vorhergehenden Ansprüche, **dadurch gekennzeichnet, dass** die Elastizität des Auslegers (5) gegenüber dem Grundkörper (4) dergestalt ist, dass der Grundkörper (4) gegenüber einer Auflagekante (10) des Auflegers senkrecht zur Türebene (Richtung 11) um 1-10 mm, vorzugsweise 2-6 mm unter Aufrechterhaltung von Druck der Auflagenkante auf den Randbereich der Öffnung beweglich ist.

12. Türmodul nach einem der vorhergehenden Ansprüche, **dadurch gekennzeichnet, dass** dieses Aufnahmen für einen Fensterhebermechanismus, einen Lautsprecher oder dergleichen aufweist.

13. Kraftfahrzeugtür (3), enthaltend ein Türmodul nach einem der vorhergehenden Ansprüche.

14. Kraftfahrzeugtür nach Anspruch 13, **dadurch gekennzeichnet, dass** die Tür (3) einen Blechaufbau besitzt und die vom Türmodul zu überdeckende Öffnung ein Ausschnitt eines Türinnenbleches (13) ist.

15. Kraftfahrzeugtür nach Anspruch 13, **dadurch gekennzeichnet, dass** die Kraftfahrzeugtür (3) einen Rahmenaufbau hat, wobei die von dem Türmodul (1) zu überdeckende Öffnung (2) von dem Rahmen zumindest bereichsweise begrenzt ist.

## Claims

1. A door module (1) for covering openings (2) in a motor-vehicle door (3), **characterised in that** the door module has a basic body (4) which, in an edge region, has at least one bracket (5) which is movable in relation to the basic body and is supported on an edge region (2a) of the opening, wherein the bracket has at least one fixing point (5a) for attachment of a door lining.

2. A door module according to claim 1, **characterised in that** it is made of sheet metal or plastic.

3. A door module according to either one of the preceding claims, **characterised in that** the lining is an inner door lining (6).

4. A door module according to any one of the preceding claims, **characterised in that** it has a circumferential seal (7) for preventing the ingress of moisture into the door opening (2).

5. A door module according to any one of the preceding claims, **characterised in that** the bracket (5) is integrally formed on the basic body (4).

6. A door module according to claim 5, **characterised in that** a film hinge (8) forming part of the basic body is arranged in the transition region from the basic body (4) to the bracket (5).

7. A door module according to any one of the preceding claims, **characterised in that** the bracket (5) has an opening (5a) as a fixing element for clipping in parts of the inner lining.

8. A door module according to any one of the preceding claims, **characterised in that** a plurality of brackets (5) are provided, wherein there are 3 to 20, preferably 5 to 15, especially preferably 8 to 12 brackets distributed around the circumference of the module (1).

9. A door module according to any one of claims 1 to 4, **characterised in that** the bracket (5) is fastened to the basic body by means of at least one movable spring member.

10. A door module according to any one of the preceding claims, **characterised in that** the door module (1) has fixing elements (9) for fastening the module to the edge region (2a) of the opening (2).

11. A door module according to any one of the preceding claims, **characterised in that** the elasticity of the bracket (5) in relation to the basic body (4) is such that the basic body (4) is movable in relation to a supporting edge (10) of the bracket perpendicularly to the door plane (direction 11) by 1-10 mm, preferably 2-6 mm, while maintaining the pressure of the supporting edge against the edge region of the opening.

12. A door module according to any one of the preceding claims, **characterised in that** it has receptacles for a window-lifter mechanism, a loudspeaker or the like.

13. A motor-vehicle door (3), containing a door module according to any one of the preceding claims.

14. A motor-vehicle door according to claim 13, **characterised in that** the door (3) has a sheet-metal structure, and the opening to be covered by the door module is a cutout in an inner door panel (13).

15. A motor-vehicle door according to claim 13, **characterised in that** the motor-vehicle door (3) has a frame structure, wherein the opening (2) to be covered by the door module (1) is at least partly bounded by the frame.

## Revendications

1. Module de portière (1) destiné à recouvrir des ouvertures (2) dans une portière de véhicule automobile (3), **caractérisé en ce que** le module de portière comprend un corps de base (4), qui présente dans une zone de bordure opposée au corps de base au moins un bras mobile (5) destiné au support sur une zone de bordure (2a) de l'ouverture, le bras présentant au moins un point de fixation (5a) destiné à fixer un revêtement de portière.

2. Module de portière selon la revendication 1, **caractérisé en ce que** celui-ci se compose d'une tôle métallique ou d'une matière plastique.

3. Module de portière selon l'une des revendications précédentes, **caractérisé en ce que** le revêtement est un revêtement intérieur de portière (6).

4. Module de portière selon l'une des revendications précédentes, **caractérisé en ce qu'**il présente une garniture périphérique (7) destinée à la limitation de l'humidité de l'ouverture de portière (2).

5. Module de portière selon l'une des revendications précédentes, **caractérisé en ce que** le bras (5) est formé intégralement contre le corps de base (4).

6. Module de portière selon la revendication 5, **caractérisé en ce que** dans la zone de transition entre le corps de base (4) et le bras (5) est disposé un film charnière (8) appartenant au corps de base.

7. Module de portière selon l'une des revendications précédentes, **caractérisé en ce que** le bras (5), en tant qu'élément de fixation, présente une ouverture (5a) destinée à clipser des parties du revêtement intérieur.

8. Module de portière selon l'une des revendications précédentes, **caractérisé en ce que** plusieurs bras (5) sont prévus, 3 à 20, de préférence 5 à 15, de façon particulièrement préférée 8 à 12 bras étant répartis sur la périphérie du module (1).

9. Module de portière selon l'une des revendications 1 à 4, **caractérisé en ce que** le bras (5) est fixé mobile au corps de base par au moins un élément à ressort mobile.

10. Module de portière selon l'une des revendications précédentes, **caractérisé en ce que** le module de portière (1) présente des éléments de fixation (9) destinés à la fixation du module au niveau de la zone de bordure (2a) de l'ouverture (2).

11. Module de portière selon l'une des revendications précédentes, **caractérisé en ce que** l'élasticité du bras (5) vis à vis du corps de base (4) est réalisée de façon telle que le corps de base (4) est mobile vis à vis d'une arête de support (10) du bras perpendiculairement au plan de la portière (direction 11) de 1 à 10 mm, de préférence de 2 à 6 mm, tout en conservant la pression de l'arête de support sur la zone de bordure de l'ouverture.

12. Module de portière selon l'une des revendications précédentes, **caractérisé en ce que** celui-ci présente des logements pour un mécanisme de lève-vitre, un haut-parleur ou similaire.

13. Portière de véhicule automobile (3) contenant un module de portière selon l'une des revendications précédentes.

14. Portière de véhicule automobile selon la revendication 13, **caractérisée en ce que** la portière (3) possède une structure de tôle et **en ce que** l'ouverture à recouvrir par le module de portière est une découpe d'une tôle intérieure de portière (13).

15. Portière de véhicule automobile selon la revendication 13, **caractérisée en ce que** la portière (3) a une structure de cadre, l'ouverture (2) à recouvrir par le module de portière (1) étant délimitée au moins par endroits par le cadre.
